(19) Europäisches Patentamt
European Patent Office
Office européen des brevets

(11) Veröffentlichungsnummer: **0 011 084**
**B1**

(12) # EUROPÄISCHE PATENTSCHRIFT

(45) Veröffentlichungstag der Patentschrift: **17.02.82**

(51) Int. Cl.³: **C 01 G 1/02,** C 01 B 13/22 // C01B33/18, C01F7/30, C01G23/07

(21) Anmeldenummer: **79102698.2**

(22) Anmeldetag: **30.07.79**

(54) **Verfahren zur pyrogenen Herstellung von feinstteiligem Oxid eines Metalls und/oder eines Metalloids.**

(30) Priorität: **17.11.78 DE 2849851**

(43) Veröffentlichungstag der Anmeldung: **28.05.80 Patentblatt 80/11**

(45) Bekanntmachung des Hinweises auf die Patenterteilung: **17.02.82 Patentblatt 82/7**

(84) Benannte Vertragsstaaten: **BE DE FR GB**

(56) Entgegenhaltungen:
**DE-A-2 153 671**
**DE-A1-2 533 925**
**DE-C-948 415**
**DE-C-974 793**
**US-A-3 365 274**

(73) Patentinhaber: **Degussa Aktiengesellschaft, Weissfrauenstrasse 9, D-6000 Frankfurt am Main 1 (DE)**

(72) Erfinder: **Schmid, Josef, Friedrich-Ebert 10, D-7888 Rheinfelden (DE)**
Erfinder: **Lange, Ludwig, Dr., Kaiserstrasse 85, D-5040 Brühl (DE)**
Erfinder: **Klebe, Hans, Dr., Ernst-Reuter-Strasse 6, D-7888 Rheinfelden (DE)**
Erfinder: **Schutte, Dieter, Dr., Ernst-Reuter-Strasse 16, D-7888 Rheinfelden (DE)**

EP 0 011 084 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Verfahren zur pyrogenen Herstellung von feinstteiligem Oxid eines Metalls und/oder eines Metalloids

Die Erfindung betrifft ein Verfahren zur pyrogenen Herstellung von feinstteiligem Oxid eines Metalls und/oder Metalloids, bei welchem als Ausgangsstoff eine verdampfbare Halogenverbindung des Metalls und/oder Metalloids eingesetzt wird und bei welchem das während der Bildung des Oxides des Metalls und/oder Metalloids als Nebenprodukt gebildete elementare Halogen während des Abkühlens der Reaktionsprodukte mit zusätzlich eingeführtem gasförmigen Wasserstoff unterhalb der Reaktionstemperatur des Knallgasgemisches, bestehend aus dem zusätzlich eingeführten Wasserstoff und dem in den Reaktionsgasen enthaltenden Sauerstoff, zu Halogenwasserstoff umgesetzt wird.

Bei der pyrogenen Herstellung von feinstteiligem Oxid eines Metalls und/oder Metalloids werden flüchtige oder verdampfbare Verbindungen des Metalls und/oder Metalloids zusammen mit brennbaren oder Wasserdampf bildenden Gasen und Sauerstoff bzw. Sauerstoff enthaltenden Gasen entweder getrennt oder in Mischung einem Brenner zugeführt. Dabei werden das brennbare und das Sauerstoff enthaltende Gas in einem solchen Mengenverhältnis, welches sowohl eine vollständige Verbrennung des brennbaren Gases als auch die Hydrolyse der verdampfbaren Verbindung des Metalls und/oder Metalloids gewährleistet, zugeführt.

Werden als Ausgangsstoffe anorganische oder organische Halogenverbindungen des Metalls und/oder Metalloids eingesetzt, so fallen das Metalloxid und/oder Metalloidoxid gemeinsam mit einem Halogenwasserstoff enthaltenden Abgas, welches in entsprechenden Abscheidevorrichtungen von dem Metall und/oder Metalloidoxid abgetrennt wird, an. In einer Nebenreaktion wird elementares Halogen gebildet. Je nach Führung der Reaktionsbedingungen für die Bildung des Metalloxids und/oder Metalloidoxides entstehen, bezogen auf die Menge an gebildeten Halogenwasserstoff, 6 bis 10 Gew.-% elementares Halogen.

Aus dem Dokument DE-C 974 793 ist es bekannt, bei der Herstellung von pyrogenem Siliciumdioxid koaxiale Rohre einzusetzen. Dabei werden die Ausgangsstoffe Siliciumtetrachlorid und sauerstoffhaltiges Gas getrennt geführt, um eine vorzeitige Reaktion dieser Stoffe miteinander bei niedrigen Temperaturen zu vermeiden.

Es ist bekannt, bei einem pyrogenen Verfahren zur Herstellung von Oxiden eine Metall und/oder Metalloids das entstandene elementare Halogen, z. B. Chlor, aus dem Reaktionsabgas zu entfernen, indem man das gebildete elementare Halogen mit Wasserstoff während des Abkühlens der Reaktionsprodukte unterhalb der Reaktionstemperatur des Wasserstoffs mit dem in dem Reaktionsabgas enthaltenden Sauerstoff reduziert (DE-A-2 533 925).

Bei diesem bekannten Verfahren, bei welchem $SiCl_4$ (Siliciumtetrachlorid) als Ausgangsstoff für die Herstellung von Siliciumdioxid verwendet wird, durchläuft das entstandene Gemisch aus Reaktionsabgas und Siliciumdioxid innerhalb einer relativ langen Kühlstrecke ein Temperaturgefälle von 1000 bis 200°C während des Abkühlens. Der zusätzliche Wasserstoff wird in einem Bereich der Kühlstrecke eingeführt, in welcher die Reaktionsabgase noch eine Temperatur von 500 bis 700°C aufweisen. Eine Zugabe des Wasserstoffes bei einer Temperatur über 700°C ist nicht zu empfehlen, da hier bereits eine Reaktion des Wasserstoffes mit dem Sauerstoff eintritt. Die Zugabe des Wasserstoffes bei einer Temperatur von unter 500°C ist ebenfalls nicht zu empfehlen, da hier die Reaktionsgeschwindigkeit der Reaktion des Wasserstoffes mit dem elementaren Chlor zu langsam ist.

Die besten Ergebnisse können erzielt werden, wenn man den elementaren Wasserstoff bei einer Temperatur zwischen 550 und 630°C einleitet.

Der genaue Einleitungspunkt für den elementaren Wasserstoff in der Kühlstrecke ist lastabhängig. Das heißt bei produktionsbedingen Änderungen in der Strömungsgeschwindigkeit muß die Einleitungsstelle für den elementaren Wasserstoff in der Kühlstrecke verlegt werden. Für die Einleitung des Wasserstoffes wird ein Rohr verwendet, welches in seiner Länge dem Durchmesser der Kühlstrecke entspricht. Dieses Rohr weist in seinem Mantel zwei Reihen von Bohrungen auf, durch welche der Wasserstoff in die Reaktionsabgase eingeleitet wird. Eine Querschnittszeichnung eines derartigen Einleitungsrohres zeigt Fig. 1.

Das bekannte Verfahren hat jedoch den Nachteil, daß schon bei geringen Laständerungen die Einleitstelle für den Wasserstoff gewechselt werden muß. Von weiterem Nachteil ist, daß der Wasserstoff mit dem elementaren Chlor unter Umständen sehr heftig unter Flammenbildung reagiert. Die Reaktion wird damit unkontrollierbar und kann unter Umständen zu einer Beeinträchtigung des in dem Reaktionsabgas enthaltenden Siliciumdioxid führen. Damit verbunden ist ein vorzeitiger Verschleiß der Einleitungsrohre für den Wasserstoff.

Gegenstand der Erfindung ist ein Verfahren zur pyrogenen Herstellung von feinstteiligem Oxide eines Metalls und/oder Metalloids, bei welchem als Ausgangsstoff eine verdampfbare Halogenverbindung des Metalls und/oder Metalloids eingesetzt wird und bei welchem das während der Bildung des Oxides des Metalls und/oder Metalloids gebildete elementare Halogen während des Abkühlens der Reaktionsprodukte mit zusätzlich eingeführtem gasförmigen Wasserstoff unterhalb der Reaktionstemperatur des Knallgasgemisches, bestehend aus dem

zusätzlich eingeführten gasförmigen Wasserstoff und dem in den Reaktionsabgasen enthaltenden Sauerstoff, zu Halogenwasserstoff umgesetzt wird, welches dadurch gekennzeichnet ist, daß man den gasförmigen Wasserstoff mittels mindestens eines Doppelmantelrohres in die Kühlstrecke einleitet, wobei man zusätzlich mittels demselben Doppelmantelrohr ein Inertgas, welches zwischen dem äußeren und inneren Mantel des Doppelmantelrohres geführt wird, einleitet.

Die Menge an zusätzlichem Wasserstoff richtet sich nach den Reaktionsbedingungen für das herzustellende spezifische Metalloxid bzw. Metalloidoxid. Dabei kann so viel Wasserstoff zugegeben werden, daß in den endgültig erhaltenen Abgas eine Menge an Wasserstoff von 1,6 bis 2,0 Vol.-% gemessen wird.

Die Zugabe des Wasserstoffes kann über die gesamte Kühlstrecke an mehreren, z. B. 3 bis 6 Stellen erfolgen, wobei an jeder Stelle ein Doppelmantelrohr eingesetzt wird.

In einer bevorzugten Ausführungsform der Erfindung leitet man den elementaren Wasserstoff bei einer Temperatur von 500 bis 700°C, insbesondere zwischen 550 und 630°C in die Kühlstrecke ein.

Als Inertgas kann man Edelgas oder Kohlendioxid, insbesondere Stickstoff verwenden. Es kann in einer Menge von 20 bis 200 $m^3/h$, vorzugsweise 50 bis 150 $m^3/h$ eingesetzt werden.

Aus Ausgangsstoff für die Herstellung der Metalloxide bzw. Metalloidoxide kann man verdampfbare Halogenverbindungen der Metalle Aluminium oder Titan bzw. der Metalloide (Halbmetalle) Silicium oder Germanium verwenden.

Zur Herstellung von Mischoxiden verschiedener Elemente kann als Ausgangsstoff ein Gemisch der verdampfbaren Halogenverbindungen der entsprechenden Elemente eingesetzt werden.

In einer vorzugsweisen Ausführungsform kann als Halogenverbindung das entsprechende Chlorid der Metalle bzw. Metalloide als Ausgangsstoff verwendet werden. Aber auch organische Halogenverbindungen können eingesetzt werden. So ist für die Herstellung von Siliciumdioxid die Verwendung von

$SiHCl_3$, $SiCl_2H_2$, $SiCl_4$, $CH_3SiCl_3$,
$(CH_3)_2SiCl_2(CH_3)_3SiCl$,
$CH_3-CH_2-SiCl_3$ oder $(CH_3-CH_2)_2SiCl_2$

möglich.

Das erfindungsgemäße Verfahren hat die Vorteile, daß der Wasserstoff intensiver mit dem Reaktionsabgas vermischt werden kann. Durch die gleichzeitige Zugabe des Inertgases kann man die Temperatur an der Einleitstelle beeinflussen, so daß bei Strömungsänderungen ein Verlegen der Einleitstelle vermieden werden kann. So kann die Einleitung des Wasserstoffes an einer Stelle erfolgen, bei welcher die Temperatur der Reaktionsabgase so hoch ist, daß ein sofortiges Abbrennen des Wasserstoffes mit dem Halogen erfolgen würde, ohne daß dieses unerwünschte Abbrennen eintritt. Vorteilhaft ist weiterhin, daß durch die Inertgaseinleitung das Einleitungsrohr für den Wasserstoff gekühlt wird und somit länger haltbar ist, und die Korrosion unterdrückt werden kann. Durch die Einleitung von Inertgas wird zusätzlich die Ablagerung von Metalloxid bzw. Metalloidoxid auf dem Einleitungsrohr verhindert.

Das erfindungsgemäße Verfahren wird anhand der Zeichnung näher erläutert und beschrieben. Es zeigt

Fig. 1 ein Wasserstoffeinleitungsrohr gemäß dem Stand der Technik,

Fig. 2 ein Wasserstoffeinleitungsdoppelmantelrohr gemäß Erfindung im Längsschnitt und

Fig. 3 das Wasserstoffeinleitungsdoppelmantelrohr gemäß Fig. 2 im Querschnitt A—A.

Gemäß der Fig. 1 ist das Wasserstoffeinleitungsrohr 1 in der Wandung der Kühlstrecke 2 so befestigt, daß es mit seiner Länge dem Durchmesser der Kühlstrecke entspricht. Das Wasserstoffeinleitungsrohr 1 weist zwei Reihen von Bohrungen 3 in der Wandung auf. Der Wasserstoff wird über eine Leitung, welche an dem Flansch 4 befestigt ist, in das Einleitungsrohr 1 eingeführt und strömt durch die Bohrung 3 in die Kühlstrecke ein.

Gemäß der Fig. 2 wird der Wasserstoff über eine Leitung, welche an dem Flansch 5, der die Bohrung 6 aufweist, befestigt ist, in das Doppelmantelrohr 7 geführt und tritt an dem offenen Ende 8 des Doppelmantelrohres 7 innerhalb der Kühlstrecke aus. Das Doppelmantelrohr 7 ist mittels dem Flansch 9, der die Bohrungen 10 aufweist, an der Wandung der Kühlstrecke befestigt. Durch die Zuführung 11 wird das Inertgas in den Zwischenraum 12 zwischen der inneren Wandung 13 und äußeren Wandung 14 des Doppelmantelrohres 7 geführt.

Das Inertgas strömt durch das offene Ende 15 des Zwischenraumes 12 in das Innere der Kühlstrecke.

Die Fig. 3 zeigt den Querschnitt A—A des Doppelmantelrohres gemäß Fig. 2. Die innere Wandung 13 und die äußere Wandung 14 des Doppelmantelrohres sind durch die Stege 16 miteinander verbunden.

## Patentanspruch

Verfahren zur pyrogenen Herstellung von feinteiligem Oxid eines Metalls und/oder Metalloids, bei welchem als Ausgangsstoff eine verdampfbare Halogenverbindung des Metalls und/oder Metalloids eingesetzt wird und bei welchem das während der Bildung des Oxides des Metalls und/oder Metalloids gebildete elementare Halogen während des Abkühlens der Reaktionsprodukte mit zusätzlich eingeführtem gasförmigen Wasserstoff unterhalb der Reaktionstemperatur des Knallgasgemisches, bestehend aus dem zusätzlich eingeführten gasförmigen Wasserstoff und dem in den Reaktionsabgasen enthaltenden Sauerstoff, zu Halogenwasserstoff umgesetzt wird, dadurch gekennzeichnet, daß man den gasförmigen Wasserstoff mittels mindestens eines Doppelmantelrohres in die Kühlstrecke einleitet, wobei man zusätzlich mittels demselben Doppelmantelrohr ein Inertgas, welches zwischen dem äußeren und inneren Mantel des Doppelmantelrohres geführt wird, einleitet.

**Claim**

A process for the pyrogenic production of a highly particulate oxide of a metal and/or metalloid in which a volatile halogen compound of the metal and/or metalloid is used as starting material and in which the elemental halogen formed during the formation of the oxide of the metal and/or metalloid is reacted during cooling of the reaction products with additionally introduced gaseous hydrogen below the reaction temperature of the oxyhydrogen gas mixture, which consists of additionally introduced gaseous hydrogen and the oxygen present in the waste reaction gases, to form hydrogen halide, characterised in that the gaseous hydrogen is introduced into the cooling zone by means of at least one double-walled tube, an inert gas being additionally introduced by means of the same double-walled tube, said inert gas being guided between the outer and inner walls of the double-walled tube.

**Revendication**

Procédé de préparation, par pyrogénation, d'un oxyde finement dispersé d'un métal et/ou d'un métalloïde, procédé dans lequel on utilise en tant que matière première un composé halogéné vaporisable du métal et/ou du métalloïde, et dans lequel l'halogène élémentaire formé pendant la formation de l'oxyde du métal et/ou du métalloïde est converti en gaz halogénhydrique pendant le refroidissement des produits de réaction, complétés par de l'hydrogène gazeux introduit, à une température inférieure à la température de réaction du mélange exposif de gaz, mélange formé de l'hydrogène gazeux introduit en supplément et de l'oxygène contenu dans les gaz résiduaires de la réaction, procédé caractérisé en ce qu'il consiste à introduire l'hydrogène gazeux, par l'intermédiaire d'au moins un tuyau à double enveloppe, dans le tronçon de refroidissement, un gaz inerte, dirigé entre l'enveloppe extérieure et l'enveloppe intérieure du tuyau à double enveloppe étant introduit en supplément par l'intermédiaire du même tuyau à double enveloppe.

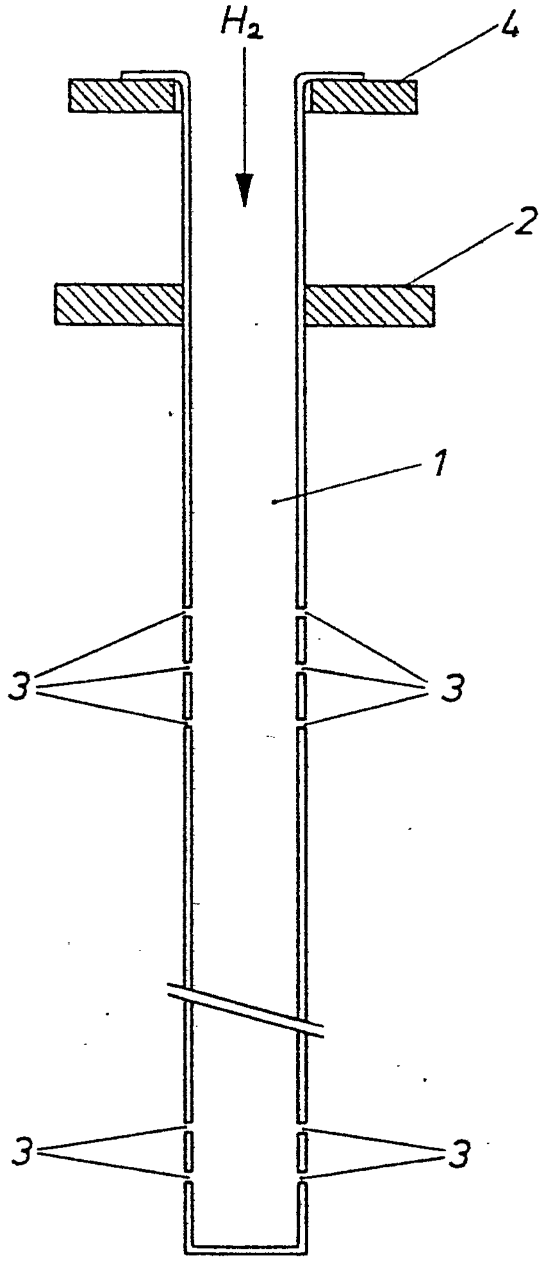


Fig. 1

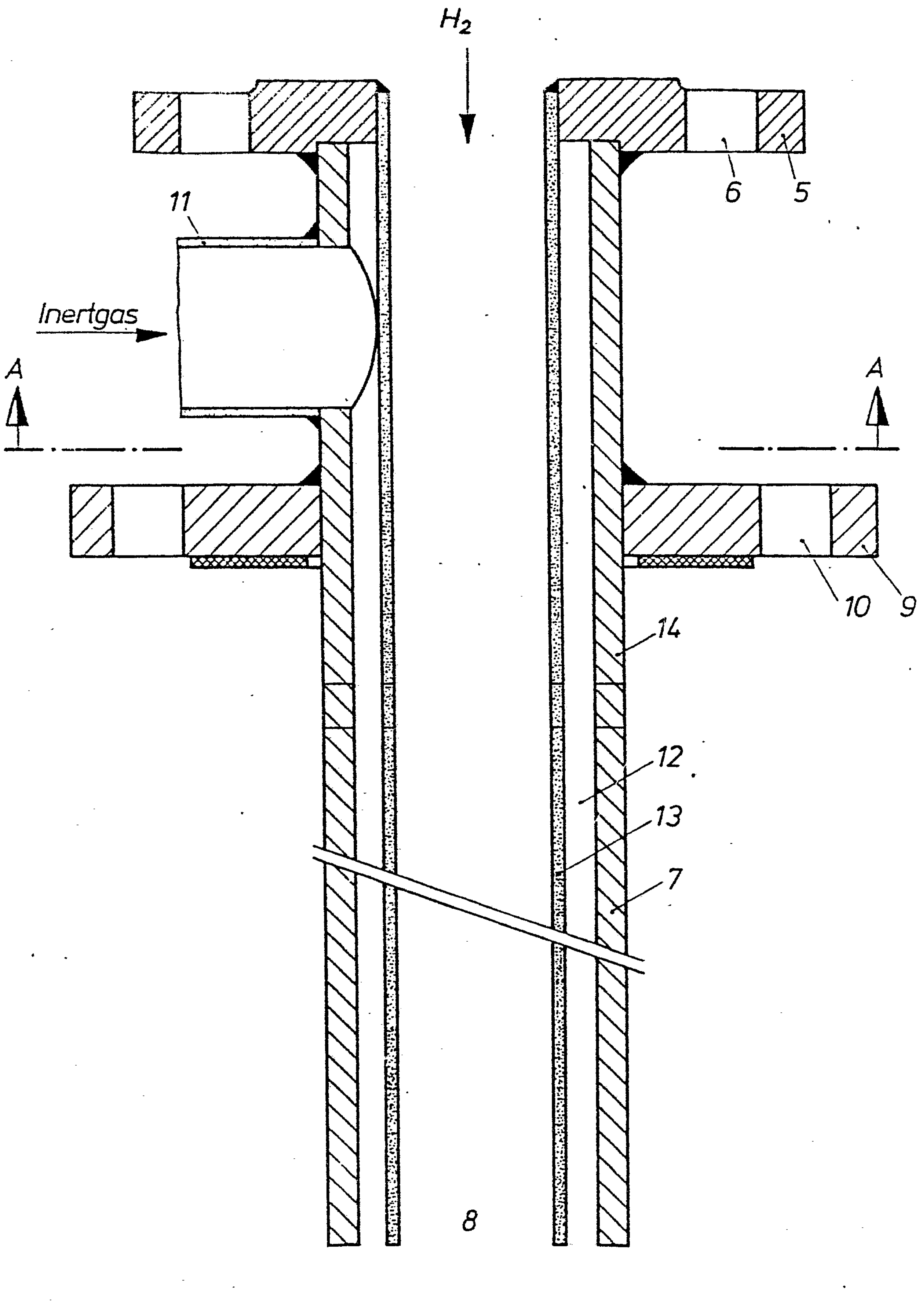


Fig. 2

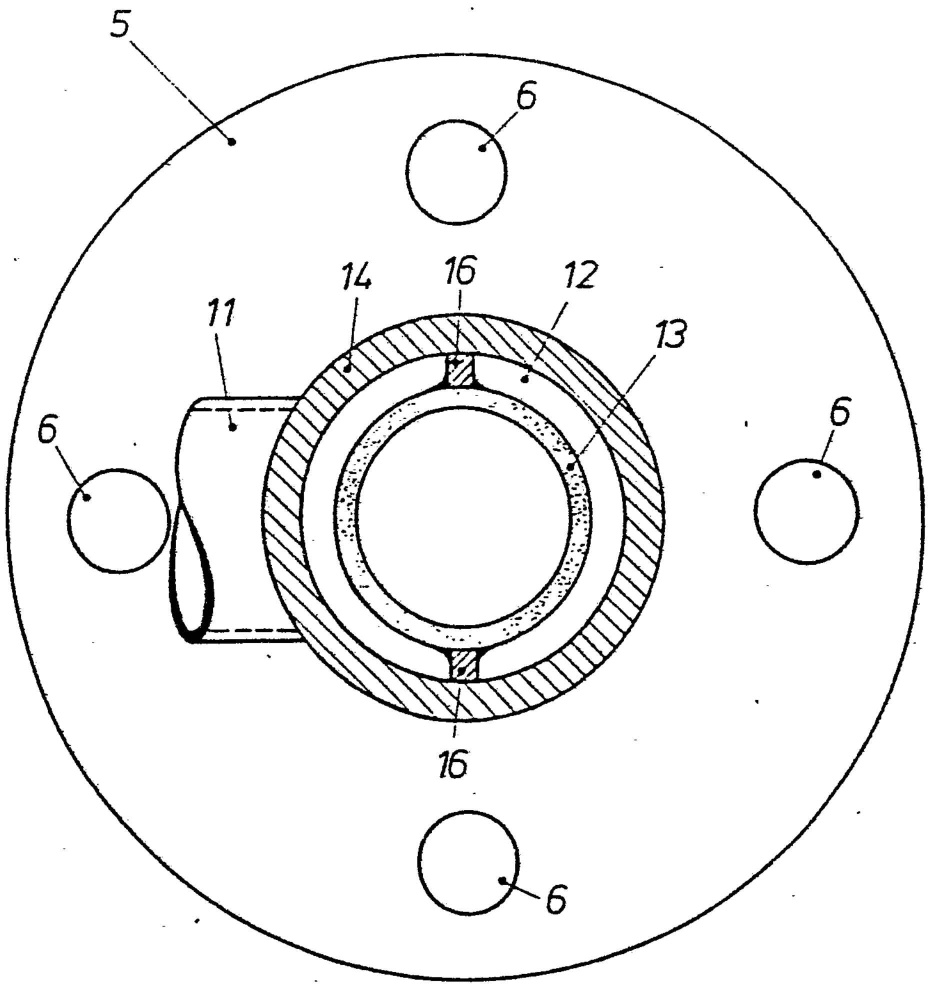


Fig. 3